# EUROPÄISCHE PATENTSCHRIFT

(11) **EP 2 191 155 B1**
(45) Veröffentlichungstag und Bekanntmachung des Hinweises auf die Patenterteilung: **13.03.2013**
(21) Anmeldenummer: 08801167.1
(22) Anmeldetag: 14.08.2008
(51) Int. Cl.: F16D 13/75

(54) **REIBUNGSKUPPLUNG MIT VERSCHLEISSNACHSTELLUNG**
FRICTION CLUTCH HAVING WEAR ADJUSTER
EMBRAYAGE À FRICTION À AJUSTAGE DE L'USURE

(30) Priorität: 23.08.2007 DE 102007039857
(43) Veröffentlichungstag der Anmeldung: 02.06.2010
(73) Patentinhaber: Schaeffler Technologies AG & Co. KG, 91074 Herzogenaurach (DE)
(72) Erfinder: RABER, Christoph, 66564 Ottweiler-Steinbach (DE)
(86) Internationale Anmeldenummer: PCT/DE2008/001344
(87) Internationale Veröffentlichungsnummer: WO 2009/024128

(56) Entgegenhaltungen:
- DE-A1- 19 857 199
- DE-C1- 4 436 109
- GB-A- 2 336 411

## Beschreibung

Die vorliegende Erfindung betrifft eine Reibungskupplung gemäß dem Oberbegriff des Patentanspruchs 1.

Insbesondere betrifft die Erfindung eine Reibungskupplung mit einer Verschleißnachstellung mit zwischen einer Druckplatte und einer gegenüber dieser axial begrenzt und drehfest zu dieser angeordneten Anpressplatte verspannbaren Reibbelägen, bei der mittels eines Wegsensors ein Abstand zwischen den Oberflächen der Druckplatte und der Anpressplatte im verspannten Zustand ermittelt wird und abhängig von einem ermittelten Fehlabstand mittels einer zwischen der Anlagefläche und der Anpressplatte angeordnete Rampeneinrichtung der Fehlabstand ausgeglichen wird.

Derartige Reibungskupplungen mit entsprechenden Verschleißnachstellungen sind bekannt. Dabei ist eine in der Regel zwischen Beaufschlagungsmitteln, wie beispielsweise einer Tellerfeder, zur Beaufschlagung einer axial begrenzt gegenüber einer Druckplatte zur Verspannung von Reibbelägen verlagerbaren Anpressplatte und der Anpressplatte selbst eine Rampeneinrichtung vorgesehen, die bei Verschleiß der Reibbeläge, der sich in einem axialen Fehlabstand zwischen Druck- und Anpressplatte bemerkbar macht, diesen Fehlabstand durch Verlagern von Rampen gegeneinander ausgleicht. Solange nicht nachgestellt werden soll, sind Rampeneinrichtung und Gegenrampen entgegen der Wirkung von Axialkräften, die durch entsprechende Energiespeicher bereit gestellt werden können, aufeinander reibschlüssig gegen Verdrehen in Umfangsrichtung fixiert. Detektiert ein sogenannter Weg- oder Verschleißsensor einen Fehlabstand, wird die Reibung aufgehoben und die Rampeneinrichtung wird zumeist unterstützt durch Federeinrichtung solange verdreht, bis die Rampen und Gegenrampen den Verschleiß wieder ausgeglichen haben und ein erneuter Reibschluss die Rampen wieder aufeinander fixiert.

Eine Reibungskupplung gemäß dem Oberbegriff des Patentanspruchs 1 ist aus der DE 198 57 199 A1 bekannt.

Für die vorliegende Erfindung stellt sich die Aufgabe, derartige Reibungskupplungen mit Verschleißnachstellungen zu verbessern. Dabei stehen insbesondere eine Vereinfachung der Nachstellung, die Erhöhung der Zuverlässigkeit und/oder eine Reduzierung der Bauteile im Vordergrund.

Erfindungsgemäß gelöst wird diese Aufgabe durch eine Reibungskupplung gemäß Patentanspruch 1. Bevorzugte Ausführungsbeispiele der Reibungskupplung sind in den Abhängigen Ansprüchen dargelegt.

Die hebelartige Spanneinrichtung kann eine Tellerfeder mit nach radial innen gerichteten, von einem Ausrücker beaufschlagten Tellerfederzungen sein, die radial außen die Anpressplatte gegen die Druckplatte verspannt und sich radial innerhalb an einem mit Druckplatte und Anpressplatte drehfest verbundenen Bauteil abstützt.

Die Ausgestaltung der Reibungskupplung kann dabei gedrückt sein, indem die im entspannten Zustand der Reibungskupplung geschlossene Reibungskupplung aufgedrückt oder die im entspannten Zustand der Reibungskupplung geöffnete Reibungskupplung zugedrückt wird. Alternativ hierzu kann die Reibungskupplung gezogen sein, indem die hebelartige Spanneinrichtung die Reibungskupplung im geschlossenen Zustand aufzieht oder im geöffneten Zustand zuzieht. Zwei derartige Reibungskupplungen können in einem Gehäuse zu einer sogenannten Doppelkupplung kombiniert sein, wobei zumindest eine der Reibungskupplungen eine Nachstelleinrichtung in vorgeschlagener Weise aufweist und beide Reibungskupplungen vorzugsweise zwangsweise zugedrückte Reibungskupplungen sind.

Die Rampeneinrichtung kann in vorteilhafter Weise aus einem Ringteil mit über den Umfang verteilten, in Umfangsrichtung ansteigenden Rampen gebildet sein, das mit entsprechend ausgebildeten Gegenrampen der Anpressplatte zusammen wirkt. Dabei kann das Ringteil in Umfangsrichtung federbelastet sein, beispielsweise kann eine Zugfeder in der Anpressplatte eingehängt und mit dem Ringteil verspannt sein. Bei anderen Formen der Rampeneinrichtung können einzelne Rampen oder mehrere Rampen umfassende Segmente vorgesehen sein, die entsprechend von Energiespeichern so beaufschlagt werden, dass sie bei eingeleiteter Nachstellung verlagert werden. In vorteilhafter Weise kann ein Rampenring von einem Energiespeicher beaufschlagt werden, der zwischen Anpressplatte und Rampenring verspannt ist und vor jedem Nachstellvorgang, beispielsweise durch Verspannen des Bauches des als beidseitig eingespannte Blattfeder ausgestalteten Energiespeichers gegen ein Kupplungsgehäuse oder ein ähnliches axial festes Bauteil, vorgespannt wird, wenn die Reibungskupplung geöffnet wird. Auf diese Weise braucht nicht die gesamte Energie, die zur Verdrehung des Rampenrings über die gesamte Lebensdauer der Reibungskupplung notwendig ist, im Energiespeicher vorgehalten zu werden.

Der Formschluss zwischen Anpressplatte und Rampeneinrichtung ist durch eine Verzahnung bestehend aus zwei ineinander greifenden Zahnsegmenten gebildet. Unter Zahnsegment ist in seiner allgemeinsten Form eine mechanische Ausprägung zu verstehen, die mit einer korrespondierenden Ausprägung des anderen Zahnsegments einen Formschluss in der Weise bildet, dass eine Längsbewegung der beiden Zahnsegmente gegeneinander nur erfolgen kann, wenn diese infolge einer vom Wegsensor festgestellten Erfordernis einer Nachstellung, beispielsweise bei einem Fehlabstand, auseinander bewegt werden sollen, beispielsweise indem die Ausprägungen auseinander geschwenkt werden, das heißt, zumindest eine Ausprägung entlang ihrer räumlichen Erstreckung aus dem Wirkungsbereich der anderen Ausprägung entfernt wird, und zusätzliche oder alternativ die Ausprägungen senkrecht zu ihrer Erstreckung voneinander getrennt werden. In vorteilhafter Weise folgen die Zahnsegmente den Umfängen der Reibeinrichtung, die ringförmig ausgestaltet sein können, so dass die Zahnsegmente kreisbogenförmig ausgestaltet sind, wobei ein Zahnsegment eine Außen- und das zu diesem korrespondierende Zahnsegment eine Innenverzahnung aufweist. Ist die Reibungskupplung nicht im Zustand der Nachstellung eines Verschleißes, bilden die beiden Zahnsegmente den Formschluss zwischen Anpressplatte und Rampeneinrichtung, so dass keine Verlagerung beziehungsweise Verdrehung der beiden Teile gegeneinander erfolgen kann. Insbesondere bei Drehungleichförmigkeiten der Brennkraftmaschinen und den daraus folgenden Relativbeschleunigungen in beide Drehrichtungen kann ein ungewolltes Nachstellen vermieden werden. Dabei kann eines der Zahnsegmente dem Wegsensor zugeordnet und das andere Zahnsegment mit der Rampeneinrichtung fest verbunden sein. In diesem Falle wird das dem Wegsensor zugeordnete Zahnsegment durch den Wegsensor angehoben, das heißt, es wird axial verlagert, während das der Rampeneinrichtung, beispielsweise einem Rampenring, zugeordneten Zahnsegment axial fest angeordnet ist. In Abhängigkeit vom Verschleiß der Reibungskupplung, beziehungsweise deren an der Kupplungsscheibe angeordneten Reibbeläge, legt der Wegsensor, der in geschlossenem Zustand einen Kontakt zur Druckplatte hat und daher stets den Abstand zwischen Druckplatte und Anpressplatte abgreift, unterschiedliche Axialwege zurück, die zu einer axialen Verlagerung des ihm zugeordneten Zahnsegments führt.

Soll eine Nachstellung erfolgen, wird der Formschluss der Verzahnung bei vorliegendem Fehlabstand, der durch die Einstellung des Wegsensors vorgegeben werden kann, durch axiales Verlagern der Zahnsegmente aufgehoben, so dass Anpressplatte und Rampeneinrichtung gegeneinander verdrehbar sind. Dabei kann das aus dem Profil, beispielsweise einer Verzahnung, des einen Zahnsegments ausgeschwenkte Profil des anderen Zahnsegments in Schwenkrichtung federbelastet sein, so dass es mit Vorspannung auf dem anderen Profil zur Ruhe kommt, bis der Nachstellvorgang beendet ist. Die Vorspannung kann durch einen federbelasteten Wegsensor ausgeübt werden, hierzu kann eine Zugfeder den Wegsensor mit einem Ende auf die Druckplatte ziehen, während im Bereich des entgegengesetzten anderen Endes eines beispielsweise stiftförmigen Wegsensors das axial verlagerbare Zahnsegment axial fest aufgenommen oder fixiert ist. In einer weiteren Ausführung kann das Zahnsegment selbst mit der Anpressplatte verspannt sein.

Ist der Formschluss zwischen Rampeneinrichtung und Anpressplatte wegen eines Fehlabstandes zwischen Druck- und Anpressplatte, beispielsweise in Folge von Verschleiß der Kupplungsbeläge, aufgehoben, wird eine Verlagerung der Rampeneinrichtung beziehungsweise Verdrehung des Rampenrings gegenüber der Anpressplatte zur Verringerung des Fehlabstandes erst dann durchgeführt, wenn die auf die Rampeneinrichtung und Anpressplatte wirkende verpressende Kraft der zwischen dem Kupplungsgehäuse und der Anpressplatte angebrachten Blattfedern zum Zurückstellen der Anpressplatte bei sich öffnender Reibungskupplung eine geringere Reibungskraft zwischen den Rampen der Rampeneinrichtung und der Anpressplatte als die Losbrechkraft der Energiespeicher zum Verdrehen der Rampeneinrichtung bewirkt. Ein Nachstellen der Rampeneinrichtung erfolgt daher nicht mit Öffnen der Reibungskupplung sondern wenn die Blattfedern bei nahezu geöffneter Reibungskupplung nahezu kraftfrei sind. Ein entsprechender Auslösepunkt der Nachstellung ergibt sich dabei aus der Auslegung der Blattfedern und dem Energiespeicher zur Verstellung der Rampeneinrichtung. Dabei ist vorteilhaft, wenn die Verdrehung der Rampeneirichtung begrenzt erfolgt. Dies bedeutet, dass der Winkel, um den sich die Rampeneinrichtung gegenüber der Anpressplatte verdrehen, vorgegeben wird. Dies kann dadurch erfolgen, dass das während einer Nachstellung axial über dem anderen liegende Zahnsegment unter Vorspannung im Falle der Verwendung einer Verzahnung bei einer Verdrehung um einen Zahn sofort wieder in das andere Zahnsegment einrastet und den Formschluss wieder ausbildet.

Um während des Verdrehens der Rampeneinrichtung einem unbeabsichtigten Rückspringen in dieselbe Zahnlücke und damit einem erneuten Formschluss ohne Ausgleich des Fehlabstandes vorzubeugen, wird ein Zahnsegment entgegen der Wirkung eines Energiespeichers begrenzt verlagerbar, vorzugsweise in einem Winkel eines halben Zahns, ausgestaltet. Hierbei wird der Energiespeicher vor der Erfassung eines Fehlabstandes bis zu einem Anschlag in Verdrehrichtung der Rampeneinrichtung vorgespannt. Sobald der Sensor einen Fehlabstand erfasst, wird das axial verlagerbare Zahnsegment aus der Verzahnung gehoben und das begrenzt verlagerbare Zahnsegment verlagert sich unter Entspannung des vorgespannten Energiespeichers entgegen der Verdrehrichtung der Rampeneinrichtung vorzugsweise bis zu einer Zahn-auf-Zahnstellung, in der sich die Zähne beider Zahnsegmente überlappen. Es versteht sich, dass beide Funktionen - axiale verlagerbare Funktion und begrenzt in Drehrichtung verdrehbare Funktion in einem Zahnsegment verwirklicht sein können und ein Bauteil für die axiale Verspannung des entsprechenden Zahnsegments auf dem Wegsensor und zur Begrenzten Verlagerung des Zahnsegments in das Zahnsegment integriert sein können, wobei der Energiespeicher als Blattfeder, die bei einer Stauchung zur Vorspannung aufgebaucht werden kann. Die begrenzte Verlagerung kann mittels in die Anpressplatte eingebrachter Stifte, Schrauben oder Nieten vorgesehen sein, die in Langlöcher geführt werden, die eine der gewünschten Verlagerung entsprechende Öffnung in Umfangsrichtung aufweisen.

Durch die axial überlappenden Zahn-auf-Zahn-Stellung, die unmittelbar nach Erfassen eines Fehlabstandes bei voll eingerückter Reibungskupplung eingenommen wird, wird quasi der Wunsch nach einer Nachstellung gespeichert, bis die Reibungskupplung wieder geöffnet und die Blattfedern zwischen Kupplungsgehäuse oder einem diesem oder der Druckplatte zugeordneten axial festen Bauteil und der Anpressplatte ins Kräftegleichgewicht mit den Zugfedern der Rampeneinrichtung kommen. Bei Erreichen dieses Kräftegleichgewichts wird die Rampeneinheit verlagert und nach einer Verlagerung in Höhe eines Winkels der Überlappung der Zähne beider Zahnsegmente schnappt das axial unter Vorspannung stehende Zahnsegment unter Bildung der Verzahnung und Ausbildung des Formschlusses wieder in das axial feststehende Zahnsegment ein. Im Weiteren werden beide Zahnsegmente um einen weiteren Winkel in Höhe eines halben Zahns der Verzahnung mitgenommen und dabei der Energiespeicher zur begrenzten Verlagerung des Zahnsegments wieder vorgespannt. Die Steigung der Rampen der Rampeneinrichtung und der korrespondierenden Rampen in der Anpressplatte, die Weite der Zähne der beiden Zahnsegmente sowie die Verschleißbereiche der Reibbeläge sind so aufeinander abgestimmt, dass über die Lebensdauer der Reibungskupplung beziehungsweise der Reibbeläge eine sinnvolle Anzahl von Nachstellungen bei annähernd gleich bleibenden Ausrückkräften innerhalb eines Nachstellintervalls vorgesehen werden kann. Es hat sich gezeigt, dass ca. 40 - 60 Nachstellungen vorteilhaft sind.

Um die Auflösung von Nachstelleinrichtung für Reibungskupplungen wie zuvor beschrieben zu verbessern, kann das dem Wegsensor zugeordnete Zahnsegment zweigeteilt werden, wobei jedes einzelne Teil getrennt und unabhängig vom anderen Teil vom Wegsensor angesteuert wird. Die Zähne oder Profile der beiden Teile sind gegeneinander um einen halben Zahn in Umfangsrichtung versetzt, so dass die Zähne eines Teils stets mit den Zähnen des anderen Teils einen Formschluss bilden, während die Zähne des anderen Teils axial auf der Verzahnung des axial fest angeordneten Zahnsegments eine Zahn-auf-Zahn-Stellung bilden. Wird vom Wegsensor ein Fehlabstand erfasst, drückt er den zweiten Teil der Zähne aus der den Formschluss bildenden Verzahnung. Hierdurch wird das Zahnsegment, das in diesem Ausgestaltungsbeispiel in vorteilhafterweise das mit der Rampeneinrichtung verbundene sein kann, da im anderen Falle gleichzeitig beide Teile des vom Wegsensor beaufschlagten Zahnsegments verlagert werden müssten, unter Wirkung des vorgespannten Energiespeichers gegen die Drehrichtung der Rampeneinrichtung um einen halben Zahn verdreht und die Zähne des ersten, die Zahn-auf-Zahn-Stellung bildenden Teils werden ebenfalls um einen halben Zahn verlagert, bleiben aber noch in derselben Axialposition, da sie noch in Höhe eines halben Zahns mit den Zähnen des anderen Zahnsegments überlappen. Dieser Zustand wird gespeichert, bis die Reibungskupplung ausgerückt wird und bei nachlassender Verspannung der Rampeneinrichtung und Anpressplatte durch die Blattfedern die Rampeneinrichtung um einen halben Zahn bis zu einem Anschlag gegen die Anpressplatte verdreht und dabei der Energiespeicher durch den Energiespeicher zum Verdrehen der Rampeneinrichtung wieder vorgespannt wird. Durch die Verdrehung werden die Zähne des zuvor auf dem Zahnsegment aufliegenden Teils in die Verzahnung gezogen und die Zähne des vor dem Nachstellvorgang die Verzahnung bildenden Teils verbleiben bis zum nächsten Nachstellvorgang axial über dem korrespondierenden Zahnsegments in einer Zahn-auf-Zahn-Stellung. Hierdurch wird die für ein ungeteiltes Zahnsegment beispielsweise eingestellte Auflösung eines Fehlabstands von ca. 0,1mm halbiert.

Durch eine Veränderung der Lage der Anschläge kann die Steuerung in vorteilhafter Weise so umgestellt werden, dass bereits eine Anpassung der Zahnsegmente an den nachgestellten Zustand der Reibungskupplung erfolgt und somit ein Formschluss unter Berücksichtigung des Nachstellwinkels bereits im noch verspanntem Zustand von Anpressplatte und Rampeneinrichtung erfolgt, so dass beim Lösen der Verspannung bereits der Formschluss für den nachstellten Zustand eingestellt ist. Hierzu wird beispielsweise bei einer axialen Verlagerung des Wegsensor infolge eines Fehlabstands das in der Verzahnung liegende Teil des dem Wegsensor zugeordneten Zahnsegments aus der Verzahnung gehoben, wodurch sich das in Umfangsrichtung vorgespannte Zahnsegment unter Auflösung der Verspannung bis zum Einrasten des anderen Teils der dem Wegsensor zugeordneten Zahnsegments in das sich drehende Zahnsegment verdreht. Es liegt dann der Zustand eines entspannten Energiespeichers am der Rampeneinrichtung zugeordneten Zahnsegment vor, die beiden Teile des dem Wegsensor zugeordneten Zahnsegments haben ihre Positionen getauscht, das zuvor verzahnte Teil liegt auf der Verzahnung und das zuvor nicht verzahnte Teil in der Verzahnung des der Rampeneinrichtung zugeordneten Zahnsegments. Insgesamt sind die beiden Zahnsegmente um einen halben Zahn gegeneinander verdreht und in Formschluss zueinander. Bei einem Öffnen der Reibungskupplung und einem Entspannen von Anpressplatte und Rampeneinrichtung werden diese gegeneinander unter Spannen des in Verdrehrichtung wirksamen Energiespeichers am Zahnsegment der Rampeneinrichtung bis an eine Anschlag um einen Verdrehwinkel, der einem halben Zahn der Verzahnung der Zahnsegmente entspricht, verdreht.

In den zuvor beschriebenen Ausgestaltungbeispielen wurde die Energie zum Verdrehen der Rampeneinrichtung und zum Vorspannen des Energiespeichers für die begrenzte Verlagerung eines Zahnsegments separat vorzugsweise als Zugfedern ausgestalteten Energiespeichern entnommen, deren Kapazität auf Lebensdauer angelegt ist. In vorteilhafter Weise kann ein Energiespeicher vorgesehen werden, der vor jedem Nachstellprozess in einer Höhe vorgespannt wird, die für eine Verdrehung in Höhe des nachzustellenden Winkels und für das Vorspannen des Energiespeichers für die Verlagerung des Zahnsegments ausreichend ist. Hierzu kann ein Energiespeicher vorgesehen werden, der sich zwischen einer Anlagefläche der Rampeneinrichtung und einem mit der Rampeneinrichtung verbundenen axial begrenzt gegen die Wirkung eines Energiespeichers verlagerbaren Zahnsegments verspannten Blattfeder abstützt. Eine Vorspannung erfolgt aus den im geschlossenen Zustand der Reibungskupplung zwischen dem Kupplungsgehäuse und der Anpressplatte verspannten Blattfedern, die während des Öffnens der Reibungskupplung den Energiespeicher gegen ein axial festes Bauteil wie Kupplungsgehäuse vorspannen. Beispielsweise kann der Energiespeicher eine gebauchte, mittels ihrer Enden an besagten Anlageflächen abstützende Blattfeder sein, die an einer Anlagefläche vorgespannt wird, die in der Druckplatte, dem Kupplungsgehäuse oder einem mit diesem verbundenen Bauteil eingearbeitet oder vorgesehen ist.

Die Erfindung wird anhand der Figuren 1 bis 15 näher erläutert. Dabei zeigen:
- Figur 1: eine Explosionszeichnung eines Ausführungsbeispiels eines Kupplungsgehäuses mit Anpressplatte und Nachstelleinrichtung einer Reibungskupplung,
- Figuren 2 bis 11: eine schematische Darstellung der schrittweisen Funktion im Schnitt und in Abwicklung,
- Figur 12: ein Detail der Figur 1,
- Figur 13: eine alternatives Ausgestaltungsbeispiel mit zweiteiligem Zahnsegment,
- Figur 14: ein Detail der Figur 13 in geänderter Perspektive
und
- Figur 15: ein Detail aus der Figur 13.

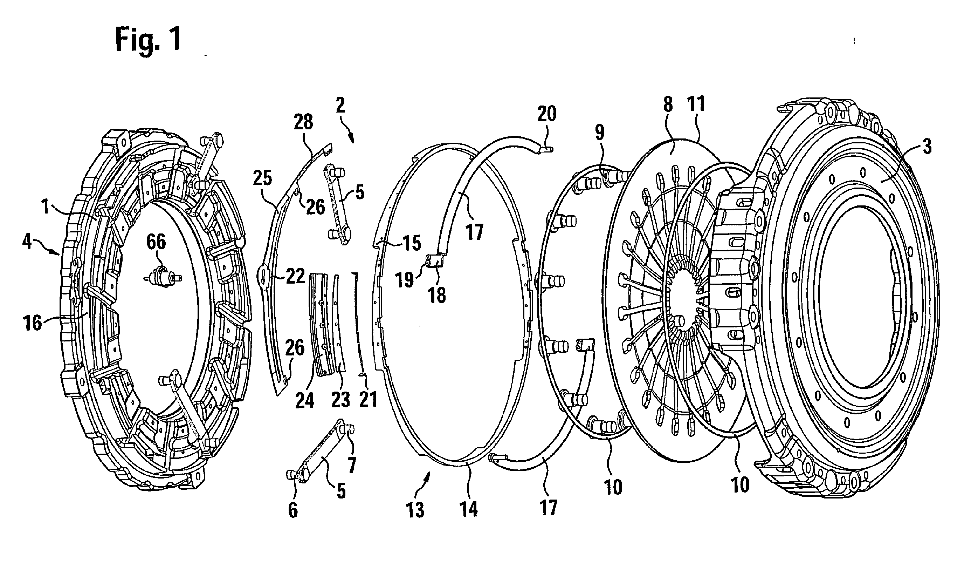

Figur 1 zeigt eine Explosionszeichnung einer Anpressplatte 1, einer Nachstelleinrichtung 2 und eines Kupplungsgehäuses 3. Die die Reibungskupplung komplettierenden Teile der Druckplatte und der Kupplungsscheibe mit den Reibbelägen und dazwischen angeordneter Belagfederung wurden weggelassen. Die Druckplatte schließt sich axial an die Reibfläche 4 der Anpressplatte 1 an, wobei die Kupplungsscheibe axial zwischen der Reibfläche 4 und einer an der Druckplatte, die in einem Schwungrad eines Einmassenschwungrads oder an der Sekundärseite eines Zweimassenschwungrads oder einem mit der Antriebswelle einer Antriebseinheit angeordneten Scheibenteil vorgesehen sein kann. Das Kupplungsgehäuse 3 ist axial fest mit der Druckplatte verbunden und nimmt die Anpressplatte 1 radial in sich auf. Die Anpressplatte 1 ist drehfest und axial verlagerbar mittels der Blattfedern 5 mit dem Kupplungsgehäuse 3 mittels der Nieten oder Bolzen 6, 7, die jeweils in zugehörigen Öffnungen in der Anpressplatte 1 und im Kupplungsgehäuse 3 befestigt werden, verbunden. Die Vorspannung der Blattfedern 5 wird dabei so eingestellt, dass die Anpressplatte 1 in geöffneten Zustand der Reibungskupplung von den Reibbelägen der Kupplungsscheibe abhebt und bei sich schließender Reibungskupplung entgegen der Wirkung der Belagfederung der Kupplungsscheibe die Reibbeläge der Kupplungsscheibe mit der Reibfläche der Druckplatte verspannt. Die Bewegung der Anpressplatte 1 wird dabei von der Tellerfeder 8 bewirkt, die mittels der Nieten 9 unter Zwischenlegung eines vorder- und rückseitigen Drahtrings 10 an dem Kupplungsgehäuse 3 befestigt. Die Tellerfeder 8 ist als zweiarmiger Hebel mit einer ringförmigen Hebelfläche auf dem Durchmesser der Drahtringe 10 ausgebildet und beaufschlagt die Anpressplatte 1 mit ihrem äußeren Kraftrand 11 in der Weise, dass im Gleichgewichtszustand ein geschlossener Zustand der Reibungskupplung bei komprimierter Belagfederung resultiert. Werden die nach innen auskragenden Tellerfederzungen 12 von einem Ausrücksystem, das der Fahrer mittels eines Kupplungspedals bedient oder das von einem automatisierten Kupplungsaktor betätigt wird, axial in Richtung Anpressplatte 1 beaufschlagt, wird entgegen der Wirkung der Tellerfeder 8 mit ihrem typischen Kraftverlauf über den Weg und unter Unterstützung der Belagfederung und unter Aufhebung der Vorspannung der Blattfedern 5 die Reibungskupplung geöffnet.

Die Reibbeläge der Kupplungsscheibe sind Verschleiß und gegebenenfalls Setzverlusten unterworfen, die sich in einer Abnahme des Abstands zwischen Druckplatte und Anpressplatte 1 äußern und die sich in unkompensiertem Falle ein Aufstellen der Tellerfederzungen 12 zur Folge hat, was sich in geänderten Kraftverhältnissen auswirkt und erhöhte Ausrückkräfte zur Folge hat. Zum Ausgleich des Verlusts an axialem Abstand wird daher der durch Verschleiß verursachte Fehlabstand durch die Nachstelleinrichtung 2 ausgeglichen. Diese wird durch eine Rampeneinrichtung 13 gebildet, die im gezeigten Ausführungsbeispiel ein Rampenring 14 mit über dessen Umfang verteilten Rampen 15 ist. Der Rampenring 14 kommt axial in Anlage zu in der Anpressplatte 1 entsprechend vorgesehenen, beispielsweise angeprägten oder spanabhebend gefertigten Gegenrampen 16. An seiner gegenüber liegenden Seite kommt der Rampenring 14 an der Tellerfeder 8 zur Anlage. Um bei Auftreten eines Fehlabstands durch Verdrehen des Rampenrings 14 auf den Gegenrampen 16 diesen auszugleichen, wird der Rampenring 14 in Umfangsrichtung federbelastet. Im gezeigten Ausführungsbeispiel werden hierzu zwei Zugfedern 17 verwendet, die sich auf einem Durchmesser des Kupplungsgehäuses 3 abstützen und an einem Ende 18 mit dem Rampenring 14 mittels Nieten 19 oder ähnlichen Befestigungsmitteln und am anderen Ende mit dem Kupplungsgehäuse 3 mittels der Nieten 20 oder ähnlichen Befestigungsmitteln befestigt sind. Da das Kupplungsgehäuse 3 und die Anpressplatte 1 den gleichen Drehsinn aufweisen und in der Regel fest miteinander verbunden sind, ist eine Befestigung der Zugfedern 17 an beiden Teilen möglich. Die Zugfedern 17 sind so vorgespannt, dass deren Vorspannung über den gesamten Verschleißbereich zur Verdrehung des Rampenrings 14 ausreichend ist.

Um ein unkontrolliertes Nachstellen zu vermeiden, bedarf es bei der Nachstelleinrichtung 2 einer Steuereinrichtung. Während des geschlossenen und damit von der Tellerfeder 8 verspannten Zustands der Reibungskupplung ist ein Verstellen infolge der hohen Reibung der Rampen 15 und Gegenrampen 16 allenfalls bei hohen Differenzbeschleunigungen infolge von Drehungleichförmigkeiten der Antriebseinheit möglich. Bei sich öffnender Reibungskupplung nimmt die Verspannung ab, da nur noch die Rückstellkraft der Blattfedern 5 zwischen dem Kupplungsgehäuse 3 und der Anpressplatte 1 eine Verspannung der Rampen 15 und Gegenrampen 16 bewirkt. Im vollständig geöffneten Zustand der Reibungskupplung nehmen die Verspannkräfte weiter ab. Um von diesen sich über die Lebensdauer gegebenenfalls ändernden Reibungskräften bei der Steuerung der Nachstellung weitgehend unabhängig zu werden, werden Rampeneinrichtung 13 und die Anpressplatte 1 mittels eines Formschlusses aufeinander bezüglich einer Verdrehung gegeneinander fixiert, solange nicht nachgestellt werden soll. Hierzu sind an dem Ringteil 14 und an der Anpressplatte Zahnsegmente 21, 22 vorgesehen, die miteinander eine Verzahnung bilden. Das Zahnsegment 21 ist aus gehärtetem Material hergestellt und wird mittels Aufnahmeteil 23 und Abstandshalter 24 am Rampenring 14 aufgenommen. Das der Anpressplatte 1 zugeordnete Zahnsegment 22 ist in dem gezeigten Ausführungsbeispiel in ein Steuerteil 25 einteilig aufgenommen. Das Steuerteil 25 ist auf der Anpressplatte 1 mittels Langlöchern 26 in Umfangsrichtung begrenzt verlagerbar aufgenommen. Die Öffnung 27 fixiert das Steuerteil 25 ohne Spiel. Dies hat zur Folge, dass der elastisch vorgesehene Bereich zwischen Öffnung 27 und dem benachbarten Langloch 26 bei einer Verlagerung des Steuerteils 25 aufgebaucht wird und damit das Steuerteil 25 in Entspannungsrichtung vorspannt, also die Funktion eines Energiespeichers 28 in Form einer Blattfeder hat. Es versteht sich, dass diese Funktion in vorteilhafter Weise auch durch separat angeordnete Federeinrichtungen wie Druck-, Zugfedern oder dergleichen erfüllt werden kann. Das Zahnsegment 22 ist weiterhin gegenüber der Anpressplatte axial elastisch ausgestaltet. Zur Erfüllung der Funktionen des Steuerteils 25 wird daher vorzugsweise Federstahl verwendet, wobei die Zähne des Zahnsegments 22 vorzugsweise gehärtet sind.

Um einen Nachstellvorgang einzuleiten, muss der Formschluss der beiden Zahnsegmente 21, 22 getrennt werden. Dies erfolgt durch Verlagern des axial elastisch am Steuerteil 25 aufgehängten Zahnsegments 22 in Richtung Tellerfeder 8 aus der Verzahnung heraus, so dass das Zahnsegment 22 über dem Zahnsegment 21 zu liegen kommt. Gesteuert wird diese axiale Verlagerung durch den Wegsensor 66, der den Abstand zwischen der Druckplatte und der Anpressplatte 1 erfasst und bei Unterschreiten eines eingestellten Abstands eine Verlagerung des Zahnsegments 22 über das Zahnsegment 21 bewirkt.

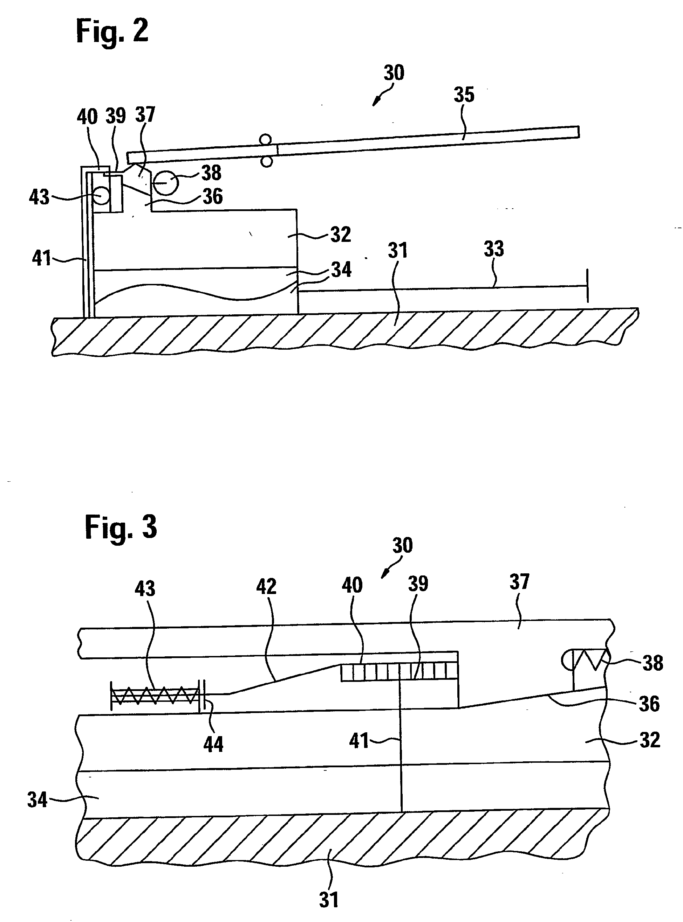

Die Funktion der Nachstellung wird nachfolgend anhand der Figuren 2 bis 11 in verschiedenen Funktionszuständen schematisch erläutert. Die Figur 2 im Schnitt und Figur 3 zeigen als Abwicklung eine geschlossene Reibungskupplung 30 mit Druckplatte 31, Anpressplatte 32, Kupplungsscheibe 33 mit Reibbelägen 34 und Belagfederung und einer Tellerfeder 35 ohne Verschleiß. Die Anpressplatte 32 weist Gegenrampen 36 auf, die mit der Rampeneinrichtung 37 in Anlagekontakt stehen. Die Rampeneinrichtung 37 wird von Energiespeichern 38 in Drehrichtung beaufschlagt. An der Rampeneinrichtung ist ein Zahnsegment 39 axial und in Umfangsrichtung fest angeordnet. Das der Anpressplatte 32 zugeordnete Zahnsegment 40 ist mit dem Wegsensor 41 verbunden und folgt dessen axialer Position bezüglich der Anpressplatte 32, die ihrerseits von der Lage der Anpressplatte 32 gegenüber der Druckplatte 31, da der Wegsensor 41 auf der Druckplatte 31 positioniert und axial verlagerbar an der Anpressplatte 32 befestigt ist. Das Zahnsegment 39 ist in ein - nicht dargestelltes - Steuerteil integriert, das entgegen der Steigung der Rampen 36 mittels des Energiespeichers 43 vorgespannt ist. Im Zustand ohne Verschleiß ist die axiale Lage des Zahnsegments 40 gegenüber dem Zahnsegment so eingerichtet, dass eine Verzahnung und damit ein Formschluss noch gewährleistet ist, so dass die Vorspannung des Energiespeichers 43 durch die Verzahnung abgefangen wird und keine Entspannung bis zum Anschlag erfolgt.

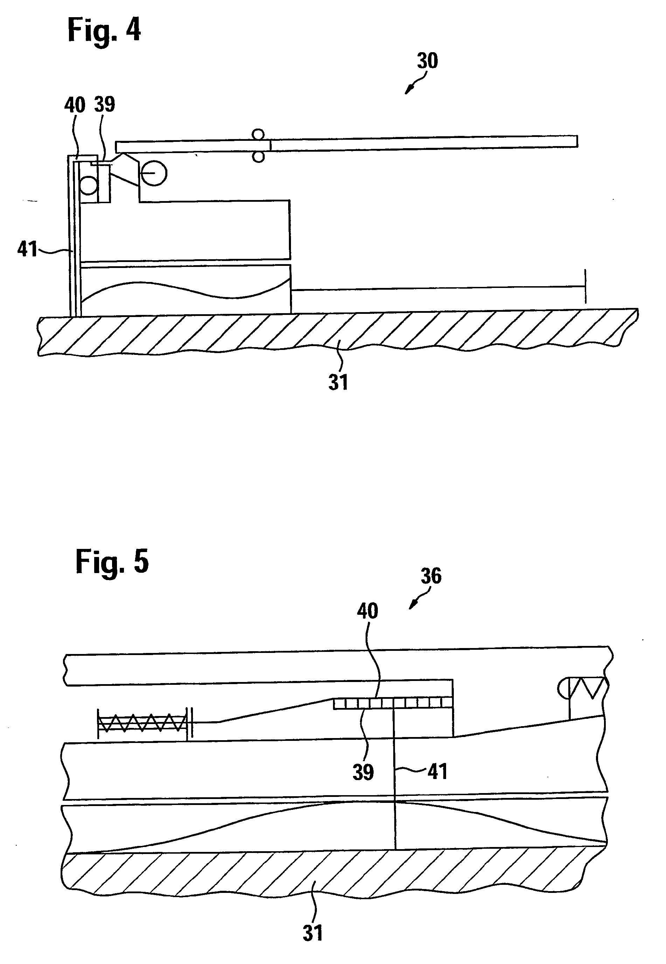

Die Figuren 4 und 5 zeigen einen Zustand, bei dem die Reibungskupplung 30 zu öffnen beginnt. Der Wegsensor 41 ist gegenüber der Anpressplatte 32 federbelastet und verlagert sich entgegen der Bewegung der Anpressplatte 32 und bleibt daher in diesem Funktionszustand noch in Kontakt mit der Druckplatte 31. Daher taucht das Zahnsegment 40, das axial an den Wegsensor 41 gekoppelt ist, tiefer in das Zahnsegment 39 ein.

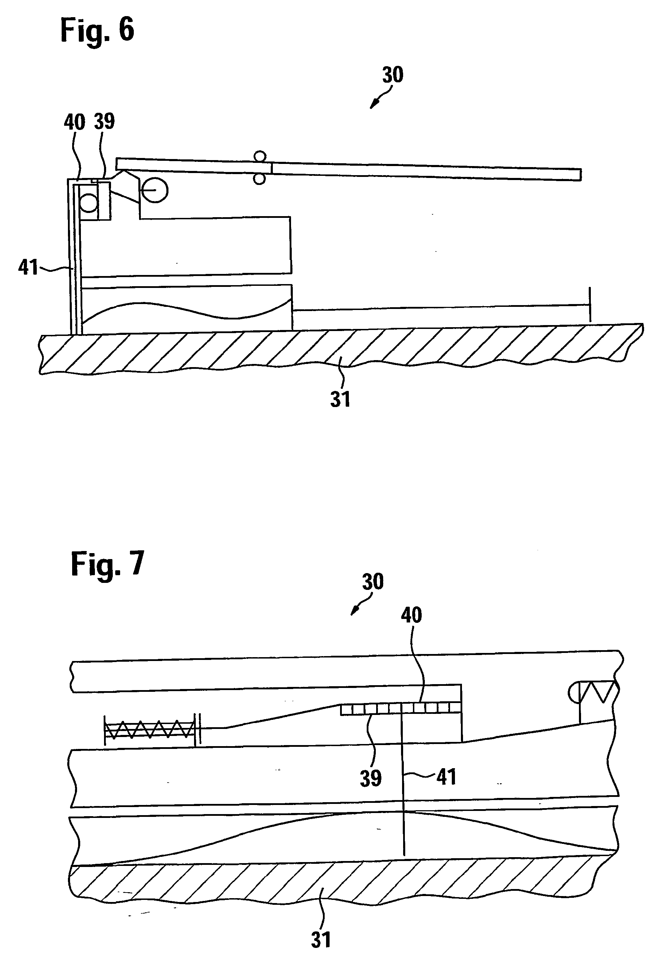

Die Figuren 6 und 7 zeigen den Zustand einer nicht nachstellenden Reibungskupplung 30 in vollgeöffnetern Zustand. Der Wegsensor 41 hat von der Druckplatte 31 abgehoben. Der Formschluss zwischen beiden Zahnsegmenten 39, 40 bleibt erhalten.

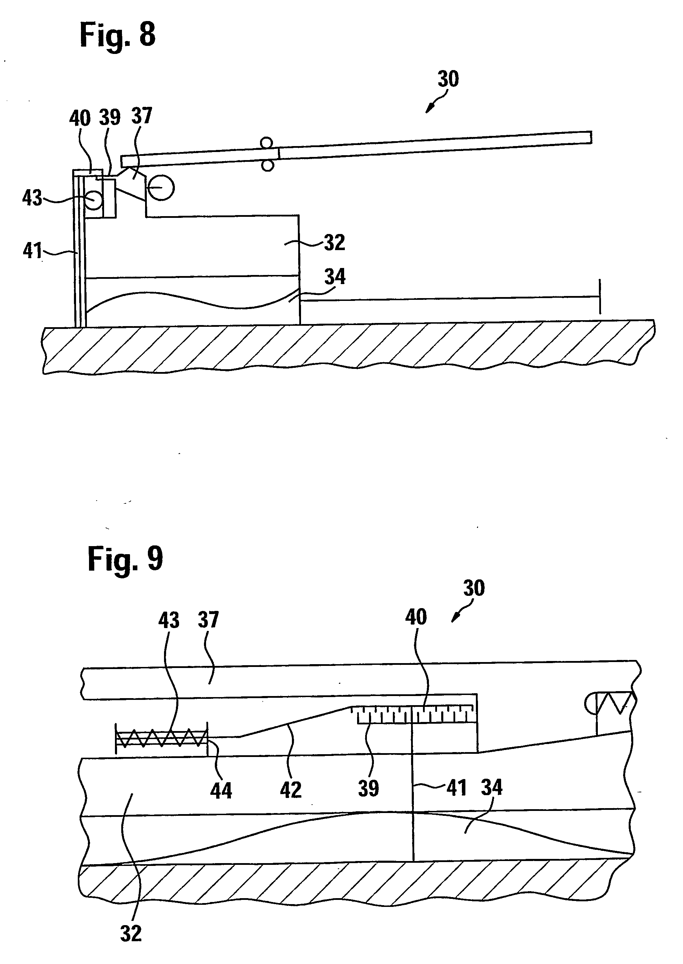

Die Figuren 8 und 9 zeigen den Zustand einer geschlossenen Reibungskupplung 30 mit Verschleiß. Die Anpressplatte 32 wird infolge der schwindenden Belagstärke der Reibbeläge 34 bei geschlossener Reibungskupplung 30 näher an die Druckplatte 31 positioniert. Als Folge steht der in seiner Länge stets konstante und die Druckplatte 31 berührende Wegsensor 41 über seine Position gegenüber der Anpressplatte 32 ohne Verschleiß über diese hinaus und verlagert das Zahnsegment 40 aus der Verzahnung mit dem Zahnsegment 39 heraus. Da die Gegenkraft der Verzahnung fehlt wird die Vorspannung des Steuerteils 42 abgebaut und es verlagert sich entgegen der Drehrichtung der Rampeneinrichtung 37 bis zum Anschlag 44, so dass die Zähne der Zahnsegmente 39, 40 axial aufeinander in eine Zahn-auf-Zahn-Stellung kommen. Auf diese Weise wird die Aufhebung des Formschlusses von der Stellung des Wegsensors 41 unabhängig, so dass bei einem Öffnen der Reibungskupplung 30 das Zahnsegment 40 keinen Formschluss mit dem Zahnsegment 39 mehr bilden kann sondern von dem Energiespeicher 43 in seiner Verdrehposition am Anschlag 44 gehalten wird.

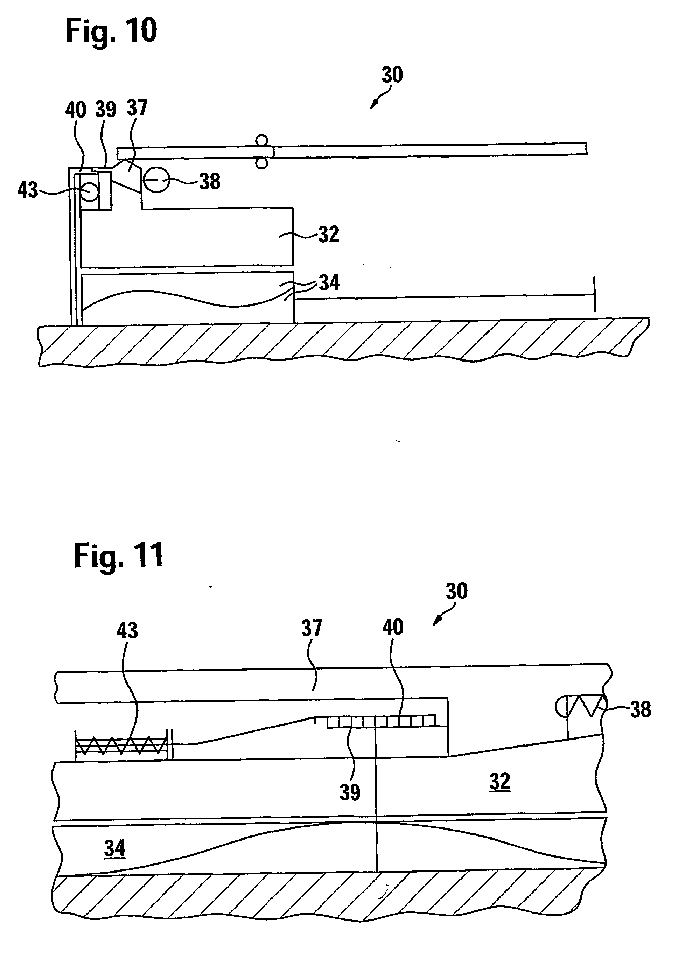

Die Figuren 10 und 11 zeigen die Nachstellung bei geöffneter Reibungskupplung 30. Mit beginnendem Öffnen der Reibungskupplung 30 wird die Verspannung bei aufgehobenen Formschluss zwischen den Rampen der Anpressplatte 32 und der Rampeneinrichtung 37, die nach Abheben der Anpressplatte 32 von den Reibbelägen 34 und deren Belagfederung nur noch von den Blattfedern zwischen dem Kupplungsdeckel und der Anpressplatte 32 aufrecht erhalten wird, weiter abgebaut, bis die durch die Energiespeicher 38 aufgebaute Spannung die Losbrechkraft der Rampeneinrichtung 37 erreicht. Die Rampeneinrichtung 37 wird darauf hin entlang der Gegenrampen 36 verdreht, bis das Zahnsegment 40 wieder in das Zahnsegment 39 einschnappt. Das Zahnsegment 40 ist hierzu axial verspannt, beispielsweise mittels einer Zugfeder, die im Wegsensor 41 integriert ist. Während der Drehbewegung der Rampeneinrichtung 37 wird der Energiespeicher 43 soweit komprimiert, das heißt, vorgespannt, bis er seine ursprüngliche Vorspannung erreicht hat. Durch den Nachstellvorgang ist der ursprüngliche Abstand zwischen Anpressplatte 32 und Druckplatte 31 wieder hergestellt und das Zahnsegment 39 hat sich gegenüber dem Zahnsegment 40, das sich wieder an derselben Stelle befindet wie vor der Nachstellung, um einen Zahn verdreht. Bezüglich seiner Ausdehnung in Umfangsrichtung ist das Zahnsegment 39 auf die maximale Anzahl von Verschleißnachstellungen, üblicherweise 40 bis 80, was bei einem Hub einer Nachstellung von ca. 0,1 mm einem Verschleißbereich der Reibbeläge von 4 bis 8 mm entspricht. Es versteht sich, dass die Rampensteigungen der Anpressplatte 32 und der Rampeneinrichtung 37 sowie die Breite der Zähne der Zahnsegmente 39, 40 auf den vorgegebenen Verschleißbereich abgestimmt sind.

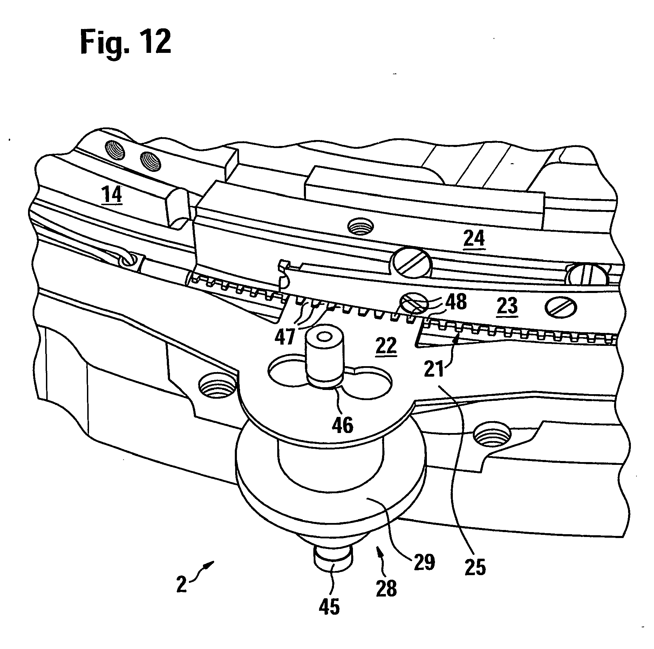

Figur 12 zeigt ein realitätsnahes Detail der Nachstelleinrichtung 2 aus der Figur 1 mit einem ausschnittsweise dargestellten Steuerteil 25, in das der Wegsensor 41 aufgenommen ist. Der Wegsensor 28 ist mit einem Sensorgehäuse 29 fest mit der Anpressplatte 1 verbunden. Das Sensorgehäuse 29 beinhaltet den Sensorstift 45, der an seinem einen Ende die Druckplatte kontaktiert und an seinem anderen Ende eine Nut 46 aufweist, in die das Steuerteil 25 so eingreift, dass eine axiale Mitnahme erfolgt, gleichzeitig aber während einer Nachstellung eine Verlagerung des Steuerteils gegenüber dem Wegsensor 28 im begrenzten Umfang erfolgen kann. Der Stift 45 ist gegen das Sensorgehäuse 29 in axiale Richtung federbelastet, so dass das Steuerteil 25 axial in Richtung Anpressplatte vorgespannt wird. Hierzu kann ein Energiespeicher im Innern des Sensorgehäuses 29 angeordnet sein. Alternativ oder zusätzlich kann das Steuerteil 25 selbst axial vorgespannt sein.

Das Steuerteil 25 weist einen Bereich auf, an dem das Zahnsegment 22 einteilig vorgesehen ist. Die Zähne 47 des Zahnsegments 22 bilden je nach Verschleißzustand eine Verzahnung mit den gegenüberliegenden Zähnen 48 des Zahnsegments 21, wobei nach jeder Nachstellung das Zahnsegments 21 um einen Zahn 48 an dem Zahnsegment 22 weiterrückt, bis schließlich die Verschleißgrenze der Reibungskupplung beziehungsweise der Reibbeläge der Kupplungsscheibe erreicht ist. Das Zahnsegment 21 ist in dem gezeigten Ausführungsbeispiel als gehärtetes Einlegeteil ausgebildet, das mittels der Aufnahmeteile 23, 24 an dem Rampenring 14 aufgenommen ist.

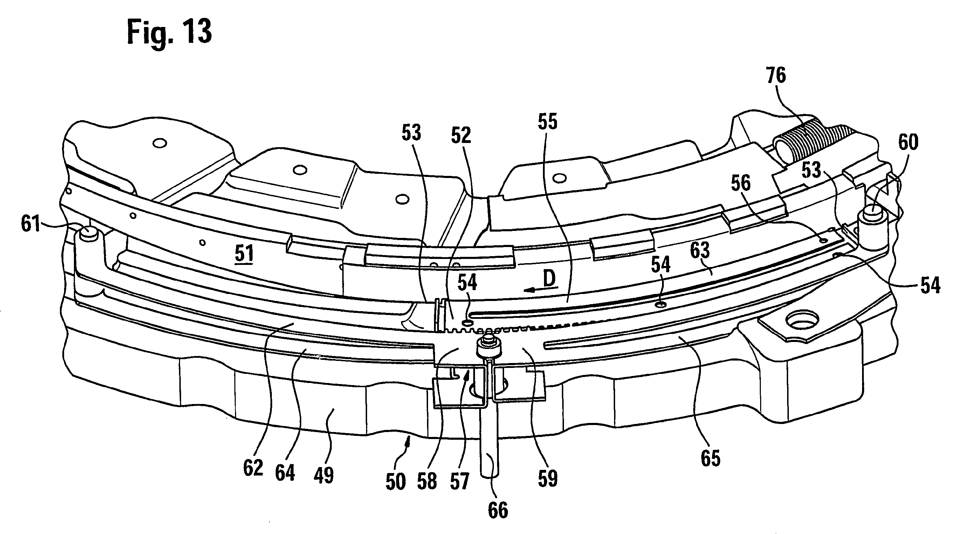

Figur 13 zeigt eine alternative Ausführungsform einer Anpressplatte 49 mit einer Nachstelleinrichtung 50, bei der das der Rampeneinrichtung 51 zugeordneten Zahnsegment 52 im Bereich von Aufnahmen 53 in Umfangsrichtung, begrenzt verlagerbar ist, indem das Zahnsegment 52 auf einer mit der Rampeneinrichtung 51 fest verbundenen Auflagefläche gleitet und in dieser Stifte, Nieten oder Schrauben befestigt sind, die in in Umfangsrichtung weisende, im Zahnsegment 52 vorgesehene Langlöcher 54 eingreifen. Das Zahnsegment 52 ist während des Formschlusses zwischen der Anpressplatte 49 und der Rampeneinrichtung 51 mittels eines Energiespeichers entgegen der Drehrichtung D der Rampeneinrichtung 51 vorgespannt. In dem gezeigten Ausführungsbeispiel ist hierzu das Zahnsegment 52 mit einem Energiespeicher 55 in Form einer Blattfeder kombiniert, die einseitig fest mit ihrer Auflageverbunden und an der anderen, offenen Seite mittels eines ein Langloch des Energiespeichers 55 durchgreifenden Befestigungsmittels 56 verbunden, beispielsweise verschraubt, vernietet oder verstiftet ist. Bei Verdrehen des Rampenrings 51 in Drehrichtung D wird der Energiespeicher 55 durch das Befestigungsmittel mitgenommen, gleichzeitig wird er durch die Verzahnung des Zahnsegments 52 mit dem Zahnsegment 57 am anderen Ende festgelegt und dadurch aufgebaucht und vorgespannt. Bei einem Aufheben des Formschlusses zwischen Rampenring 51 und Anpressplatte 49 wird die Spannung abgebaut, indem das Zahnsegment 52 in Drehrichtung D verschoben wird. Dabei kann der Anschlag an den Langlöchern 54 oder eine Neubildung des Formschlusses für die Drehbewegung begrenzend wirken.

Der Formschluss zwischen Rampeneinrichtung 51 und Anpressplatte wird auf der Seite der Anpressplatte durch ein zweigeteiltes Zahnsegment 57 mit den Segmentteilen 58, 59 gebildet, die jeweils fest und nicht gegen die Anpressplatte 49 verdrehbar mit dieser verbunden sind. Zur Abstützung der Zug- und Schubkräfte, beispielsweise bei Relativbeschleunigungen der Antriebseinheit, sind die Segmentteile 58, 59 jeweils in beide Richtungen mit einem oberen Stützarm 62, 63 und einem unteren Stützarm 64, 65 an einer Abstützung 60, 61, die mit der Anpressplatte 49 fest verbunden sind, abgestützt. Die Segmentteile 58, 59 werden dadurch axial elastisch aber drehfest abgestützt und werden voneinander unabhängig axial durch den Wegsensor 66 angelenkt.

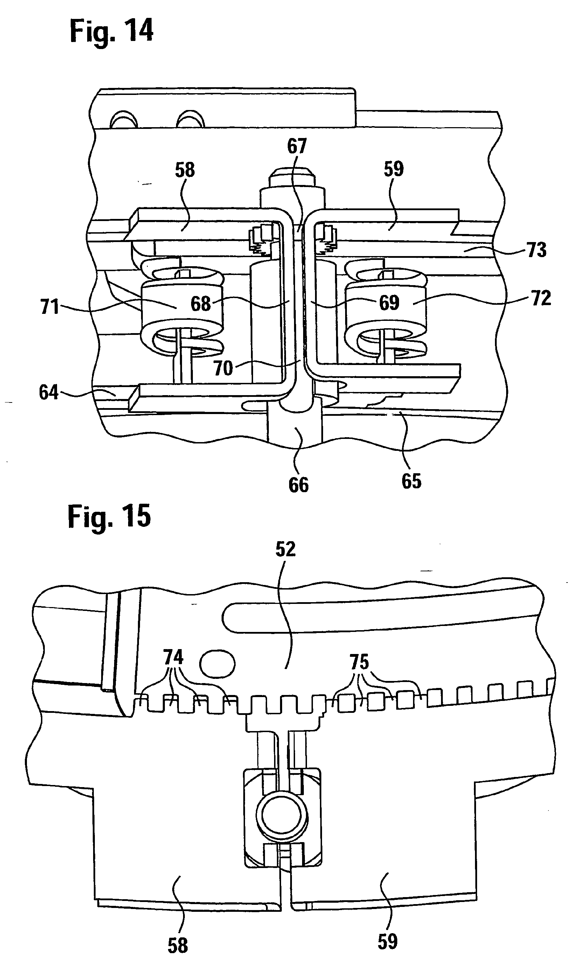

Figur 14 zeigt ein Detail der in Figur 13 gezeigten Anordnung des Wegsensors 66 in Unteransicht. Der Wegsensor 66 weist einen radial erweiterten Bund 67 oder Bord auf, an dem sich beide Segmentteile axial abstützen. In dem gezeigten Ausführungsbeispiel ist der Bund 67 an einem separaten, mit dem Wegsensor 66 verbundenen Teil, beispielsweise einer auf einem Gewinde des Wegsensors 66 angeordnete Mutter, angebracht, so dass der Bund 67 relativ zum Wegsensor 66 justierbar ist und mittels der Außenverzahnung des Bundes 67 bei der gewünschten Einstellposition fixierbar ist. Die beiden Segmentteile 58, 59 bilden jeweils eine Wange 68, 69 unterschiedlicher Länge, damit die unteren Stützarme 64, 65 axial übereinander aneinander vorbeigeführt werden können. Die beiden Wangen 68, 69 können in einer im Wegsensor 66 eingebrachten Nut 70 geführt sein. In einem besonderen Ausgestaltungsbeispiel erfolgt die Führung in der Nut 70 reibungsarm gelagert, so dass bei entsprechender axial verlagerbarer Befestigung des Wegsensors 66 in der Anpressplatte 49 die Stützarme 62, 63, 64, 65 entfallen können.

Die beiden Segmentteile 58, 59 sind jeweils für sich axial gegen den Bund 67 verspannt. Im gezeigten Ausführungsbeispiel verspannt jeweils eine an der Basis der unteren Stützarme 64, 65 eingehängte und in axiale Richtung abgestützte Druckfeder 71, 72 die Segmentteile 58, 59 gegen ein an der Rampeneinrichtung 51 (Figur 13) angeordnetes, die Anschläge 53, 54 aufweisendes Bauteil 73. Es versteht sich, dass die Segmentteile auch gegenüber anderen Bauteilen an der Anpressplatte oder der Rampeneinrichtung oder des Wegsensors 66 verspannt werden kann.

Aus Figur 15 wird ersichtlich, dass die Anordnung der beiden Segmentteile 58, 59 in Umfangsrichtung in der Weise erfolgt, dass die Zähne 74 des Segmentteiles 58 gegenüber den Zähnen 75 des Segmentteils 59 um einen halben Zahn versetzt sind, so dass die Zähne eines Segmenteiles auf Lücke stehen und die Verzahnung mit den Zähnen des Zahnsegmentes 52 - und damit den Formschluss zwischen Rampeneinheit und Anpressplatte - bilden und die Zähne des anderen Segmentteiles axial über dem Zahnsegment 52 eine Zahn-auf-Zahn-Stellung mit den Zähnen des Zahnsegmentes 52 bilden, solange keine Nachstellung erfolgt.

Eine Beschreibung einer Nachstellung dieses Ausführungsbeispiels erfolgt anhand der Figuren 13, 14, 15. Ausgehend von der in Figur 15 dargestellten Einstellung wird bei einem Fehlabstand von Druckplatte und Anpressplatte 49 der Wegsensor 66 so weit ausgelenkt, dass das Segmentteil 58 aus der Verzahnung gehoben wird und das Zahnsegment 52 nicht mehr verspannt. Dadurch baut sich die Vorspannung des Energiespeichers 55 ab und das Zahnsegment verlagert sich um einen halben Zahn, so dass beide Segmentteile 58, 59 über dem Zahnsegment 52 entgegen der Wirkung der Druckfedern 71, 72 zur Anlage kommen. Beim nächsten Öffnen der Reibungskupplung erfolgt mit zunehmender Entlastung der Rampeneinrichtung 51 ein Verdrehen dieser in Drehrichtung D unter Wirkung des oder der zwischen Rampeneinrichtung 51 und Anpressplatte 49 wirksamen Energiespeicher 76. Dabei wird das Zahnsegment weiterverdreht und das Segmentteil 59 rastet unter Wirkung der Druckfeder 72 in die Verzahnung mit dem Zahnsegment 52 unter erneuter Bildung eines Formschlusses ein, während das Segmentteil 58 in einer Zahn-auf-Zahn-Stellung über dem Zahnsegment 52 verbleibt. Der nächste Nachstellvorgang erfolgt nach demselben Schema mit vertauschten Segmentteilen. Es sei noch angemerkt, dass während des Verdrehens der Rampeneinrichtung 51 der Energiespeicher 55 wieder vorgespannt wird, indem der Anschlag 54 in Umfangsrichtung beaufschlagt.

Eine auf die Figuren 13 bis 15 bezogene alternative Steuerung der Nachstellung kann in der Weise erfolgen, dass ein Wechsel des Formschlusses von einer nicht nachgestellten in eine nachgestellte Position bereits bei der Detektion eines Fehlabstandes durch den Wegsensor 66 erfolgt. Dabei werden die Positionen der Langlöcher 54 so eingestellt, dass bei einer axialen Verlagerung eines der Teile 58, 59 aus der Verzahnung mit dem Zahnsegment 52 sofort die Vorspannung des Energiespeichers 55 ein Verdrehen des Zahnsegments 52 gegenüber dem Zahnsegment 57 bewirkt. Durch die Verdrehung schnappt das unter axialer Vorspannung stehende Teil 59, 58, das zuvor nicht in der Verzahnung war, in die Verzahnung mit dem Zahnsegment 52 und bildet wiederum einen Formschluss mit diesem, wobei sich die beiden Zahnsegmente in einer um einen halben Zahn zueinander verdrehten Position befinden und die Langlöcher 54 nun an ihrem anderen Ende an den Stiften positioniert sind sowie der Energiespeicher 55 entspannt oder zumindest nahezu entspannt ist. Wird die Reibungskupplung nun geöffnet und die axiale Spannung zwischen Anpressplatte 49 und Rampeneinrichtung 51 aufgehoben, verdrehen sich diese unter Wirkung der Energiespeicher 76 und entgegen der Wirkung des Energiespeichers 55, wodurch dieser wieder gespannt wird. Die Verdrehung zwischen Anpressplatte 49 und Rampeneinrichtung 51 wird durch Erreichen der Begrenzungen der Langlöcher 54 durch die in der Rampeneinrichtung 51 eingebrachten Stifte begrenzt. Während dieser Verdrehung drehen die Zahnsegmente 52, 57 unter Beibehaltung des Formschlusses mit.

Es versteht sich, dass die Steueranschläge, die in dem gezeigten Ausführungsbeispiel durch die Langlöcher 54 in Verbindung mit den auf der Rampeneinrichtung aufgenommenen Stiften gebildet sind, auch an anderer Stelle zwischen einem das der Rampeneinrichtung 51 zugeordneten Zahnsegment und der Rampeneinrichtung vorgesehen sein kann.

## Patentansprüche

1. Reibungskupplung (30) mit einer Nachstelleinrichtung (2, 50) mit zwischen einer Druckplatte (31) und einer gegenüber der Druckplatte (31) axial begrenzt, drehfest und in Schließrichtung der Reibungskupplung (30) federbelastet zur Druckplatte (31) angeordneten Anpressplatte (1, 32, 49) verspannbaren Reibbelägen (34), einer hebelartigen Spanneinrichtung der Anpressplatte (1, 32, 49) mit einer Anlagefläche, einem Wegsensor (41, 66) zur Ermittlung eines Abstands zwischen den Reibflächen (4) der Druckplatte (31) und der Anpressplatte (1, 32, 49) im verspannten Zustand, einer zwischen der Anlagefläche und der Anpressplatte (1, 32, 49) angeordnete Rampeneinrichtung (13, 37, 51) zum Ausgleich eines vom Wegsensor (41, 66) erfassten Fehlabstandes, wobei der Fehlabstand in verspanntem Zustand der Reibbeläge (34) ermittelt wird und bei entspanntem Zustand der Reibbeläge (34) ausgeglichen wird, wobei die Rampeneinrichtung (13, 37, 51) und die Anpressplatte (1, 32, 49) formschlüssig miteinander verbunden sind, und der Formschluss bei Vorliegen eines Fehlabstandes aufgehoben wird, **dadurch gekennzeichnet, dass** der Formschluss zwischen Anpressplatte (1, 32, 49) und Rampeneinrichtung (13, 37, 51) durch eine Verzahnung bestehend aus zwei ineinander greifenden Zahnsegmenten (21, 22, 39, 40, 52, 57) gebildet ist, und der Formschluss der Verzahnung bei vorliegendem Fehlabstand durch axiales Verlagern der Zahnsegmente (21, 22; 39, 40; 52, 57) aufhebbar ist, indem die Zahnsegmente (21, 22; 39, 40; 52, 57) axial gegeneinander verlagert werden.

2. Reibungskupplung (30) nach Anspruch 1, **dadurch gekennzeichnet, dass** die hebelartige Spanneinrichtung eine Tellerfeder (8, 35) mit nach radial innen gerichteten, von einem Ausrücker beaufschlagten Tellerfederzungen (12) ist, die radial außen die Anpressplatte (1, 32, 49) gegen die Druckplatte (31) verspannt und sich radial innerhalb an einem mit Druckplatte (31) und Anpressplatte (1, 32, 49) drehfest verbundenen Bauteil abstützt.

3. Reibungskupplung (30) nach einem der Ansprüche 1 oder 2, **dadurch gekennzeichnet, dass** die Rampeneinrichtung (13, 37, 51) aus einem Rampenring (14) mit über den Umfang verteilten, in Umfangsrichtung ansteigenden Rampen (15) gebildet ist, das mit entsprechend ausgebildeten Gegenrampen (16) der Anpressplatte (1, 32, 49) zusammen wirkt.

4. Reibungskupplung (30) nach Anspruch 3, **dadurch gekennzeichnet, dass** die Rampeneinrichtung (13, 37, 51) in Umfangsrichtung federbelastet ist.

5. Reibungskupplung (30) nach einem der Ansprüche 1 bis 4, **dadurch gekennzeichnet, dass** eines der Zahnsegmente (22, 40, 57) dem Wegsensor (41, 66) und das andere Zahnsegment (21, 39, 52) der Rampeneinrichtung (13, 37, 51) zugeordnet ist.

6. Reibungskupplung (30) nach Anspruch 5, **dadurch gekennzeichnet, dass** das dem Wegsensor (41, 66) zugeordnete Zahnsegment (22, 40, 57) in Betätigungsrichtung der Reibungskupplung (30) federbelastet ist.

7. Reibungskupplung (30) nach einem der Ansprüche 1 bis 6, **dadurch gekennzeichnet, dass** bei vorliegendem Fehlabstand eine Verdrehung der Rampeneinrichtung (13, 37, 51) zur Anpressplatte (1, 32, 49) zur Verringerung des Fehlabstandes begrenzt erfolgt.

8. Reibungskupplung (30) nach Anspruch 7, **dadurch gekennzeichnet, dass** eines der Zahnsegmente (22, 40, 52) entgegen der Wirkung eines Energiespeichers (28, 43, 55) gegenüber dem korrespondierenden Zahnsegment (21, 39, 57) in Umfangsrichtung begrenzt verlagerbar ist.

9. Reibungskupplung (30) nach Anspruch 8, **dadurch gekennzeichnet, dass** der Energiespeicher (28, 55) eine zwischen Anpressplatte (1, 32, 47) und Zahnsegment (22, 40, 52) eingespannte Blattfeder ist.

10. Reibungskupplung (30) nach Anspruch 8 oder 9, **dadurch gekennzeichnet, dass** der Energiespeicher (28, 43, 55) durch die begrenzte Verlagerung des Zahnsegments (22, 40, 52) entspannt und durch Verdrehen der Rampeneinrichtung (13, 37, 51) vorgespannt wird.

11. Reibungskupplung nach einem der Ansprüche 1 bis 10, **dadurch gekennzeichnet, dass** das dem Wegsensor (66) zugeordneten Zahnsegment (57) in zwei Segmentteile (58, 59) geteilt ist und die Zähne (74) des einen Segmentteils (58) um eine halbe Zahnbreite zu den Zähnen (75) des anderen Segmentteils (59) versetzt sind.

12. Reibungskupplung nach einem der Ansprüche 1 bis 11, **dadurch gekennzeichnet, dass** ein zwischen Anpressplatte und Rampeneinrichtung wirksam angeordneter Energiespeicher während einer Nachstellung entspannt und beim Öffnen der Reibungskupplung wieder vorgespannt wird.

## Claims

1. Friction clutch (30) having an adjustment device (2, 50) with friction linings (34) capable of being braced between a thrust plate (31) and a pressure plate (1, 32, 49) arranged in relation to the thrust plate (31) so as to be spring-loaded with respect to the thrust plate (31) in an axially limited manner, fixedly in terms of rotation and in the closing direction of the friction clutch (30), with a lever-like tension device of the pressure plate (1, 32, 49) having a bearing surface, with a displacement sensor (41, 66) for determining a distance between the friction surfaces (4) of the thrust plate (31) and of the pressure plate (1, 32, 49) in the braced state, and with a ramp device (13, 37, 51), arranged between the bearing surface and the pressure plate (1, 32, 49), for compensating an incorrect distance detected by the displacement sensor (41, 66), the incorrect distance being determined in the braced state of the friction linings (34) and being compensated in the relaxed state of the friction linings (34), the ramp device (13, 37, 51) and the pressure plate (1, 32, 49) being connected positively to one another, and the positive connection being cancelled when an incorrect distance is present, **characterized in that** the positive connection between the pressure plate (1, 32, 49) and ramp device (13, 37, 51) is formed by a toothing consisting of two intermeshing toothed segments (21, 22, 39, 40, 52, 57), and the positive connection of the toothing can be cancelled, in the presence of an incorrect distance, by axial displacement of the toothed segments (21, 22; 39, 40; 52, 57), **in that** the toothed segments (21, 22; 39, 40; 52, 57) are displaced axially with respect to one another.

2. Friction clutch (30) according to Claim 1, **characterized in that** the lever-like tension device is a cup spring (8, 35) with radially inward-directed cup-spring tongues (12) acted upon by a disengaging device, which cup spring raises the pressure plate (1, 32, 49) against the thrust plate (31) radially on the outside and is supported radially on the inside on a component connected fixedly in terms of rotation to the thrust plate (31) and pressure plate (1, 32, 49).

3. Friction clutch (30) according to either one of Claims 1 and 2, **characterized in that** the ramp device (13, 37, 51) is formed from a ramp ring (14) with ramps (15) distributed over the circumference and rising in the circumferential direction, which ramp ring cooperates with correspondingly formed counter-ramps (16) of the pressure plate (1, 32, 49).

4. Friction clutch (30) according to Claim 3, **characterized in that** the ramp device (13, 37, 51) is spring-loaded in the circumferential direction.

5. Friction clutch (30) according to one of Claims 1 to 4, **characterized in that** one of the toothed segments (22, 40, 57) is assigned to the displacement sensor (41, 66) and the other toothed segment (21, 39, 52) is assigned to the ramp device (13, 37, 51).

6. Friction clutch (30) according to Claim 5, **characterized in that** the toothed segment (22, 40, 57) assigned to the displacement sensor (41, 66) is spring-loaded in the direction of actuation of the friction clutch (30).

7. Friction clutch (30) according to one of Claims 1 to 6, **characterized in that**, when an incorrect distance is present, rotation of the ramp device (13, 37, 51) in relation to the pressure plate (1, 32, 49) takes place to a limited extent for the purpose of reducing the incorrect distance.

8. Friction clutch (30) according to Claim 7, **characterized in that** one of the toothed segments (22, 40, 52) can be displaced in the circumferential direction to a limited extent with respect to the corresponding toothed segment (21, 39, 57) counter to the action of an energy accumulator (28, 43, 55).

9. Friction clutch (30) according to Claim 8, **characterized in that** the energy accumulator (28, 55) is a leaf spring tension-mounted between the pressure plate (1, 32, 47) and toothed segment (22, 40, 52).

10. Friction clutch (30) according to Claim 8 or 9, **characterized in that** the energy accumulator (28, 43, 55) is relaxed by means of the limited displacement of the tooth segment (22, 40, 52) and is prestressed by means of the rotation of the ramp device (13, 37, 51).

11. Friction clutch according to one of Claims 1 to 10, **characterized in that** the toothed segment (57) assigned to the displacement sensor (66) is divided into two segment parts (58, 59), and the teeth (74) of one segment part (58) are offset by the amount of half a tooth width with respect to the teeth (75) of the other segment part (59).

12. Friction clutch according to one of Claims 1 to 11, **characterized in that** an energy accumulator arranged actively between the pressure plate and ramp device is relaxed during adjustment and is prestressed again when the friction clutch is opened.

## Revendications

1. Embrayage à friction (30) comprenant un dispositif de réglage (2, 50), avec des garnitures de friction (34) pouvant être serrées entre une plaque de pression (31) et une plaque de pressage (1, 32, 49) disposée de manière limitée axialement, solidaire en rotation et sollicitée par ressort dans la direction de fermeture de l'embrayage à friction (30) par rapport à la plaque de pression (31), un dispositif de serrage de type levier de la plaque de pressage (1, 32, 49) avec une surface d'appui, un capteur de position (41, 66) pour déterminer une distance entre les surfaces de friction (4) de la plaque de pression (31) et de la plaque de pressage (1, 32, 49) dans l'état serré, un dispositif à rampe (13, 37, 51) disposé entre la surface d'appui et la plaque de pressage (1, 32, 49) pour compenser une erreur de distance détectée par le capteur de position (41, 66), l'erreur de distance étant déterminée dans l'état serré des garnitures de friction (34) et étant compensée dans l'état desserré des garnitures de friction (34), le dispositif à rampe (13, 37, 51) et la plaque de pressage (1, 32, 49) étant connectés l'un à l'autre par engagement par coopération de forme et l'engagement par coopération de forme étant supprimé en présence d'une erreur de distance, **caractérisé en ce que** l'engagement par coopération de forme entre la plaque de pressage (1, 32, 49) et le dispositif à rampe (13, 37, 51) est formé par une denture constituée de deux segments dentés (21, 22, 39, 40, 52, 57) venant en prise l'un dans l'autre, et l'engagement par coopération de forme de la denture peut être supprimé en présence d'une erreur de distance par décalage axial des segments dentés (21, 22 ; 39, 40 ; 52, 57), en décalant axialement les segments dentés (21, 22 ; 39, 40 ; 52, 57) l'un par rapport à l'autre.

2. Embrayage à friction (30) selon la revendication 1, **caractérisé en ce que** le dispositif de serrage de type levier est un ressort Belleville (8, 35) avec des langues de ressort Belleville (12) orientées radialement vers l'intérieur, sollicitées par un dispositif de débrayage, lequel ressort Belleville serre radialement à l'extérieur la plaque de pressage (1, 32, 49) contre la plaque de pression (31) et s'appuie radialement à l'intérieur contre un composant connecté de manière solidaire en rotation à la plaque de pression (31) et à la plaque de pressage (1, 32, 49).

3. Embrayage à friction (30) selon l'une quelconque des revendications 1 ou 2, **caractérisé en ce que** le dispositif à rampe (13, 37, 51) est formé d'une bague à rampes (14) avec des rampes (15) réparties sur la périphérie, montant dans la direction périphérique, laquelle bague à rampe coopère avec des rampes conjuguées (16) réalisées de manière correspondante de la plaque de pressage (1, 32, 49).

4. Embrayage à friction (30) selon la revendication 3, **caractérisé en ce que** le dispositif à rampe (13, 37, 51) est sollicité par ressort dans la direction périphérique.

5. Embrayage à friction (30) selon l'une quelconque des revendications 1 à 4, **caractérisé en ce que** l'un des segments dentés (22, 40, 57) est associé au capteur de position (41, 66) et l'autre segment denté (21, 39, 52) est associé au dispositif à rampe (13, 37, 51).

6. Embrayage à friction (30) selon la revendication 5, **caractérisé en ce que** le segment denté (22, 40, 57) associé au capteur de position (51, 66) est sollicité par ressort dans la direction d'actionnement de l'embrayage à friction (30).

7. Embrayage à friction (30) selon l'une quelconque des revendications 1 à 6, **caractérisé en ce qu'**en présence d'une erreur de distance, une rotation du dispositif à rampe (13, 37, 51) par rapport à la plaque de pressage (1, 32, 49) a lieu dans une mesure limitée pour réduire l'erreur de distance.

8. Embrayage à friction (30) selon la revendication 7, **caractérisé en ce que** l'un des segments dentés (22, 40, 52) peut être décalé de manière limitée dans la direction périphérique à l'encontre de l'action d'un accumulateur d'énergie (28, 43, 55) par rapport au segment denté correspondant (21, 39, 57).

9. Embrayage à friction (30) selon la revendication 8, **caractérisé en ce que** l'accumulateur d'énergie (28, 55) est un ressort à lame serré entre la plaque de pressage (1, 32, 47) et le segment denté (22, 40, 52).

10. Embrayage à friction (30) selon la revendication 8 ou 9, **caractérisé en ce que** l'accumulateur d'énergie (28, 43, 55) est détendu par le décalage limité du segment denté (22, 40, 52) et est précontraint par la rotation du dispositif à rampe (13, 37, 51).

11. Embrayage à friction selon l'une quelconque des revendications 1 à 10, **caractérisé en ce que** le segment denté (57) associé au capteur de position (66) est divisé en deux parties de segment (58, 59) et les dents (74) d'une partie de segment (58) sont décalées d'une demi-largeur de dent par rapport aux dents (75) de l'autre partie de segment (59).

12. Embrayage à friction selon l'une quelconque des revendications 1 à 11, **caractérisé en ce qu'**un accumulateur d'énergie disposé activement entre la plaque de pressage et le dispositif à rampe est détendu pendant un réglage et est à nouveau précontraint lors de l'ouverture de l'embrayage à friction.
